# EUROPÄISCHE PATENTSCHRIFT

(11) **EP 3 025 785 B1**
(45) Veröffentlichungstag und Bekanntmachung des Hinweises auf die Patenterteilung: **26.01.2022**
(21) Anmeldenummer: 15190340.8
(22) Anmeldetag: 19.10.2015
(51) Int. Cl.: B03C 3/15, B03C 3/36, B03C 3/41, B03C 3/49, B01D 46/42

(54) **VORRICHTUNG UND VERFAHREN ZUM REINIGEN VON RAUCHGAS EINER METALLURGISCHEN ANLAGE**
DEVICE AND METHOD FOR PURIFICATION OF FLUE GAS OF A METALLURGICAL PLANT
DISPOSITIF ET PROCÉDÉ DE NETTOYAGE DE GAZ DE FUMÉE D'UNE INSTALLATION MÉTALLURGIQUE

(30) Priorität: 25.11.2014 DE 102014223917
(43) Veröffentlichungstag der Anmeldung: 01.06.2016
(73) Patentinhaber: SMS group GmbH, 40237 Düsseldorf (DE)
(72) Erfinder: Wübbels, Thilo, 40764 Langenfeld (DE)
(74) Vertreter: Klüppel, Walter

(56) Entgegenhaltungen:
- EP-A2- 2 256 411
- EP-A2- 2 551 018
- AT-B- 243 388
- CH-A- 242 599
- CH-A5- 620 057
- CN-U- 202 645 615
- DE-A1-102009 044 152
- DE-A1-102012 224 523
- DE-C- 469 780
- DE-C- 571 158
- SU-A1- 1 607 955
- US-A- 4 957 512

## Beschreibung

Die Erfindung betrifft eine Reinigungsvorrichtung für Rauchgas einer metallurgischen Anlage nach dem Oberbegriff von Anspruch 1, und ein entsprechendes Verfahren nach dem Oberbegriff von Anspruch 7.

In einer metallurgischen Anlage, zum Beispiel ein Konverter oder ein Elektroofen, kommt es üblicherweise zur Bildung von Rauchgas. Zur Vermeidung einer Umweltverschmutzung muss das Rauchgas vor einer Abgabe an die Umgebung hinreichend entstaubt werden. Zum Reinigen von Rauchgas bzw. zum Waschen von Gasen ist seit langer Zeit ein sogenannter Nasswäscher bekannt, z. B. aus DE 1 176 099.

Aus WO 2010/046071 A1 sind ein Verfahren und eine Vorrichtung zur Reinigung von Rauchgas einer metallurgischen Anlage bekannt, wobei hierzu herkömmlich bekannte Anlagenkomponenten in Form eines Gaswäschers und eines nachfolgenden Nasselektrofilters verwendet werden. Der Gaswäscher und der Nasselektrofilter sind als separate Anlagenkomponenten vorgesehen, die durch eine Verbindungsleitung miteinander verbunden sind. Ein Nachteil der Anlagentechnik gemäß WO 2010/046071 A1 besteht darin, dass sie große Abmessungen bzw. Baumaße beansprucht.

Im Stand der Technik ist eine Behandlung von Feinstäuben und Aerosolen industrieller Emissionen auch durch Nassentstaubung bekannt, bei der eine Waschflüssigkeit in einen Gasstrom eingedüst wird. Die hierzu verwendeten Nassabscheider sind beispielsweise in Form von Venturiwäschern bekannt. Der Wirkungsgrad und die Intensität einer Reinigung von Feinstäuben, Rauchgas oder dergleichen mittels der Nasswäscher-Technologie unter Verwendung von Venturiwäschern ist maßgeblich davon beeinflusst, in weichem Maße eine Waschflüssigkeit mit dem im Gasstrom enthaltenen Staub in Kontakt gebracht werden kann. Der Grad der Abscheidung der Partikel durch die Waschflüssigkeit ist z.B. von der Geometrie einer Kehle des Venturiwäschers oder von der Relativgeschwindigkeit zwischen eingedüster Waschflüssigkeit und dem Gasstrom bzw. des Staubes abhängig.

Nach dem Stand der Technik, z.B. aus DE 24 36 577 A1, ist ein Venturi-Waschturm bekannt, durch den Rauchgas vertikal von oben nach unten durchgeleitet wird. Im Bodenbereich des Venturi-Waschturms ist eine Leiteinrichtung in Form eines Wirbelschaufelseparators angeordnet, durch den die Strömung des Rauchgases tangential in Richtung einer Innenumfangsfläche des Venturi-Waschturm umgeleitet wird. Ein solcher Venturi-Waschturm unterliegt dem Nachteil, dass trotz des integrierten Wirbelschaufelseparators der Wassergehalt in dem Rauchgas nach Verlassen des Venturi-Waschturms zu hoch ist, was bei Aggregaten, die dem Venturi-Waschturm nachgeordnet sind, z.B. bei Gebläse oder dergleichen, zu Beeinträchtigungen führt. Weitere Nachteile sind darin begründet, dass der Staubgehalt in dem Rauchgas nach Verlassen des Venturi-Waschturms teilweise aktuelle Umweltauflagen nicht erfüllt, und dass eine nachträgliche Installation zusätzlicher Aggregate (z.B. Tropfenabscheidung oder Nasselektrofilter) aus Platzgründen in der Regel nicht möglich ist.

Aus der gattungsgemäßen DE 10 2012 224 523 A1 sind ein Verfahren und eine Vorrichtung zum Reinigen von Rauchgas einer metallurgischen Anlage bekannt. Hierbei sind eine mit der metallurgischen Anlage verbindbare Vorreinigungsstufe, in der eine vor Reinigung und Kühlung des Rauchgases unter Verwendung von Wasser erfolgt, und eine der Vorreinigungsstufe nachfolgende Hauptreinigungsstufe, in der eine Feinreinigung des Rauchgases erfolgt, vorgesehen. Innerhalb der Hauptreinigungsstufe wird das Rauchgas von oben nach unten durch ein elektrisches Feld geleitet, wobei es zu einer Abscheidung von Wasserpartikeln und darin gebundener Staubpartikeln an Niederschlagselektroden kommt.

Aus der DE 571 158 C sind eine Reinigungsvorrichtung und ein entsprechendes Verfahren zur Reinigung von Rauchgas bekannt. Diese Reinigungseinrichtung ist in Form eines Fliehkraftnaßelektrofilters ausgebildet, bei dem die Fliehkraftreinigung für das Rauchgas außerhalb der Elektrofilterstufe zwischen dieser und der Naßvorreinigerstufe eingeschaltet und so ausgebildet ist, dass der nass vorgereinigte Gasstrom über eine Düse beschleunigt auf den Spiegel eines dicht unterhalb des Düsenmundes angeordneten Flüssigkeitsbades aufprallt und an diesem um 180° umgelenkt wird, um dann aufsteigend die Elektroden der Elektrofilterstufe zu durchwandern.

Aus US 4 957 512 A ist eine Reinigungsvorrichtung zum Reinigen von Gas bekannt, bei der innerhalb eines elektrischen Abscheiders an der Innenumfangsfläche von dessen Gehäuse separate hohle zylindrische Sammelektroden befestigt sind, an denen sich Staubpartikel eines Gases, welches in das Gehäuse des elektrischen Abscheiders unten, d.h. unterhalb der zylindrischen Sammelektroden eingeleitet wird und anschließend entlang der zylindrischen Sammelektroden nach oben strömt, abscheiden können.

Aus CH 620 057 A5 ist ein Hochleistungs-Ionisiergerät zum Ionisieren und Reinigen von Gasen bekannt, das mindestens eine scheibenförmige Innenelektrode aufweist, die konzentrisch in einer rohrförmigen und als Venturirohr ausgebildeten Außenelektrode angeordnet ist. Durch eine zwischen der Innen- und Außenelektrode angelegte Spannung wird ein elektrisches Feld erzeugt, durch die ein zu reinigendes Gas hindurch geleitet wird und das Gas ionisiert wird. Hierbei können sich die erzeugten Ionen an elektrisch neutralen Teilchen anlagern und diese unter der Wirkung des elektrischen Feldes an der rohrförmigen Außenelektrode ablagern. Die Eindüsung einer Waschflüssigkeit in das elektrische Feld ist nicht vorgesehen.

Aus SU 1 607 955 A1 ist eine Reinigungsvorrichtung für Rauchgas einer metallurgischen Anlage bekannt, die ein kegelförmiges und vertikal angeordnetes Gehäuse aufweist, in dem eine Sprühelektrode zum Erzeugen eines elektrischen Felds angeordnet ist. In das Rauchgas wird Wasser eingebracht, wobei anschließend das angefeuchtete Rauchgas vertikal von oben nach unten durch das kegelförmige Gehäuse der Vorrichtung geleitet wird.

Aus AT 243 388 B ist ein Verfahren zum Reinigen von heißem Rauchgas einer metallurgischen Anlage bekannt. Hierbei kommt ein Nasselektrofilter zum Einsatz, in dem eine Mehrzahl von Sprühelektroden und Niederschlagselektroden angeordnet sind. Vor dem Eintritt in das Nasselektrofilter wird das Rauchgas mit einer Kühl - bzw. Waschflüssigkeit behandelt. Entsprechend bildet sich in dem Rauchgas ein Kondensat, das in den Abscheidefeldern des Nasselektrofilters bzw. an den darin angeordneten Niederschlagselektroden abgeschieden wird.

Aus CH 242 599 A sind eine Vorrichtung und ein Verfahren zur Abscheidung von feinen Beimengungen aus einem Gasstrom bekannt, wobei der zu reinigende Gasstrom elektrisch geladen und der Wirkung eines elektrostatischen Feldes ausgesetzt, und gleichzeitig einer Zentrifugalkraft unterworfen wird. Zu diesem Zweck wird der Gasstrom durch ein entsprechend ausgebildetes Gehäuse hindurch geleitet, ohne dass dabei eine Waschflüssigkeit in den Gasstrom eingebracht wird.

Aus DE 469 780 C sind ein Verfahren und eine Vorrichtung zur elektrischen Abscheidung von Schwebekörpern aus während der elektrischen Behandlung kreisend bewegten Gasen bekannt. Hierbei wird das Gas in mehrfachen Spiralwindungen durch ein elektrisches Feld geleitet und nach Durchgang durch dieses Feld in der Spiralachse abgeführt. Die Spiralgänge der hierzu eingesetzten Vorrichtung sind um einen Schornstein gelegt, derart, dass dieser Schornstein den Anschluss oder die Fortsetzung des in der Spiralachse liegenden Abzugsrohres des Abscheiders bildet.

Aus CN 202 645 615 U ist eine Vorrichtung für die Behandlung von Rauchgas einer Kohlenmine bekannt, bei der das Rauchgas durch ein elektrisches Feld hindurch geleitet wird. Hierbei kommt es zu einem Niederschlag von ionisierten Rauchgaspartikeln an Niederschlagselektroden.

Aus EP 2 551 018 A2 ist eine elektrostatische Filteranlage bekannt, bei der in einem Abgaskanal eines Kamins eine längliche Sprühelektrode zentrisch angeordnet ist. Die zentrische Anordnung der Sprühelektrode innerhalb des Abgaskanals wird durch gegenseitig abstoßende Magnetelemente erreicht, die einerseits an der Sprühelektrode und andererseits an der Wand des Kamins befestigt sind. Hierdurch wird ein Kontakt bzw. ein Kurzschluss zwischen der Sprühelektrode und der Innenwand des Kamins, die als Niederschlagselektrode dient, verhindert.

Der Erfindung liegt die Aufgabe zugrunde, die Reinigung von Rauchgas einer metallurgischen Anlage mit kompakten und preiswerten Mitteln und insbesondere die Reinigungsqualität zu verbessern.

Diese Aufgabe wird durch eine Reinigungsvorrichtung mit den Merkmalen von Anspruch 1 und durch ein Verfahren mit den Merkmalen von Anspruch 7 gelöst. Vorteilhafte Weiterbildungen der Erfindung sind in den abhängigen Ansprüchen definiert.

Eine erfindungsgemäße Reinigungsvorrichtung dient zur Reinigung von Rauchgas bei schmelz-metallurgischen Aggregaten, und umfasst ein mit seiner Längsachse vertikal angeordnetes und im Querschnitt kreisförmiges Gehäuse, das eine Innenumfangsfläche sowie eine Einlassöffnung und eine Auslassöffnung für das Rauchgas aufweist, und eine in einem unteren Bereich bzw. Bodenbereich des Gehäuses angeordnete Leiteinrichtung. Die Auslassöffnung ist oberhalb der Leiteinrichtung angeordnet. Diese Leiteinrichtung kann von dem Rauchgas angeströmt werden, so dass das Rauchgas innerhalb des Gehäuses tangential in Richtung der im Querschnitt kreisförmigen Innenumfangsfläche des Gehäuses geleitet wird, um daran Staubpartikel abzuscheiden. Innerhalb des Gehäuses der Vorrichtung ist eine Einrichtung zum Erzeugen eines elektrischen Felds vorgesehen. Das Rauchgas wird innerhalb des Gehäuses durch das elektrische Feld hindurch geleitet, um die Staubpartikel, die in dem Rauchgas enthalten sind, zu ionisieren und in Richtung der Niederschlagsfläche zu leiten. Die Einrichtung zum Erzeugen eines elektrischen Felds umfasst ein Elektrodenpaar, wobei eine Elektrode dieses Elektrodenpaars aus zumindest einer von dem Rauchgas umströmbaren Sprühelektrode gebildet ist. Die andere Elektrode des Elektrodenpaars ist durch die im Querschnitt kreisförmige Innenumfangsfläche des Gehäuses gebildet und dient als Niederschlagsfläche für die Staubpartikel bzw. für die an den Staubpartikeln gebundenen Wassertropfen. An der Sprühelektrode kann vorzugsweise eine negative Hochspannung angelegt werden. Das Gehäuse der Vorrichtung ist als Venturi-Waschturm mit einer Venturikehle und einem daran angrenzenden Strömungskanal ausgebildet, wobei im Bereich der Venturikehle zumindest eine Einspritzdüse vorgesehen ist, durch die eine Waschflüssigkeit in den Strömungskanal eingedüst werden kann.

In gleicher Weise sieht die Erfindung ein Verfahren zum Reinigen von Rauchgas bei schmelz-metallurgischen Aggregaten vor, wobei das Rauchgas innerhalb eines im Querschnitt kreisförmigen Gehäuses durch eine Leiteinrichtung, die in einem unteren Bereich bzw. Bodenbereich des Gehäuses angeordnet ist, tangential in Richtung einer als Niederschlagsfläche dienenden und im Querschnitt kreisförmigen Innenumfangsfläche des Gehäuses geleitet wird, um daran Staubpartikel abzuscheiden. Innerhalb des Gehäuses wird ein elektrisches Feld erzeugt, wobei das Rauchgas durch das elektrische Feld hindurchgeleitet wird, um die in dem Rauchgas enthaltenen Staubpartikel zu ionisieren und in Richtung der Niederschlagsfläche zu leiten. Das Rauchgas wird innerhalb des Gehäuses vor dem Hindurchtreten durch das elektrische Feld durch einen Venturi-Strömungskanal geleitet, wobei eine Waschflüssigkeit in den Venturi-Strömungskanal eingedüst wird. Innerhalb des Gehäuses strömt das Rauchgas vertikal nach oben.

Der Erfindung liegt die wesentliche Erkenntnis zugrunde, dass ein Abscheiden bzw. Herauslösen von in Rauchgas enthaltenen Staubpartikeln durch Erzeugen einer gezielten Strömung für das Rauchgas dadurch verbessert werden kann, dass der durch die gezielte Strömung verursachte Zentrifugaleffekt durch eine elektrische Feldstärke überlagert wird, die auf das Rauchgas einwirkt. Dies wird dadurch sichergestellt, dass das Rauchgas innerhalb des Gehäuses durch das elektrische Feld hindurchgeleitet wird, zweckmäßigerweise über eine möglichst lange Strecke. Dies bedeutet, dass ein Abscheiden bzw. ein Herauslösen von Staubpartikeln aus dem Rauchgas durch dessen elektrostatische Aufladung, die beim Hindurchtreten durch das elektrische Feld hervorgerufen wird, gesteigert wird.

Die Wirkung des elektrischen Felds ist bei einem nassmechanischen Trennverfahren möglich, wonach in das Rauchgas, bevor es das elektrische Feld erreicht, eine Waschflüssigkeit eingedüst wird, so dass in dem elektrischen Feld dann die Wassertropfen ionisiert werden, in denen die einzelnen Staubpartikel gebunden sind. Im Falle des nassmechanischen Trennverfahrens kommt es an der Niederschlagsfläche zu einer Ablagerung von ionisierten Wassertropfen in Verbindung mit den Staubpartikeln. Dies führt dann neben einer Verminderung der in dem Rauchgas enthaltenen Staubpartikel zusätzlich zu dem Vorteil, dass der Wassergehalt in dem Rauchgas beträchtlich vermindert wird.

Die Effizienz der Wasserabscheidung wird durch die elektrostatische Aufladung der Gasatmosphäre innerhalb des Gehäuses gesteigert. Gleichzeitig wird hierdurch der Reingasstaubgehalt in dem Rauchgas beim Austreten aus dem Gehäuse der Vorrichtung verringert.

Zweckmäßigerweise sind angrenzend an die Innenumfangsfläche des Gehäuses eine Mehrzahl von Sprühelektroden in gleichem Abstand zueinander angeordnet. Eine solche ringförmige Anordnung einer Mehrzahl von Sprühelektroden gewährleistet eine große Fläche für das elektrische Feld, durch das das Rauchgas hindurchgeleitet wird. Die Verwendung der Innenumfangsfläche des Gehäuses als Niederschlagselektrode führt zu dem weiteren Vorteil, dass hierdurch die nutzbare Niederschlagsfläche maximiert wird.

Die Ausbildung der erfindungsgemäßen Vorrichtung als Venturi-Waschturm führt vorteilhaft zu einer kompakten Bauweise, die im Vergleich zu einem herkömmlichen Venturi-Waschturm keinen zusätzlichen Platzbedarf erfordert.

In vorteilhafter Weiterbildung der Erfindung strömt das Rauchgas durch das elektrische Feld vertikal nach oben, bevor es durch die Auslassöffnung aus dem Gehäuse der Vorrichtung austritt. Eine solche Strömungsrichtung des Rauchgases führt insbesondere bei dem nassmechanischen Trennverfahren, bei dem in Folge des Eindüsens einer Waschflüssigkeit in das Rauchgas die einzelnen Staubpartikel in Wassertropfen gebunden sind, zu dem Vorteil, dass die Wassertropfen sich schwerkraftbedingt nach unten bewegen, und jedenfalls aus der Strömung des Rauchgases herausgelöst werden.

Die Anwendung der Erfindung bei schmelz-metallurgischen Aggregaten ist zum Beispiel in Verbindung mit BOF-Konvertern, SAF-Öfen oder dergleichen möglich.

Des Weiteren ist es möglich, bereits bestehende Anlagen, z.B. in Form eines Venturi-Waschturms, nachzurüsten, indem das erläuterte Elektrodenpaar zum Erzeugen des elektrischen Felds innerhalb des Gehäuses des Venturi-Waschturms installiert wird.

Insbesondere durch die Verminderung des Wasseranteils und die dadurch verminderte Beanspruchung von einzelnen Anlagenkomponenten ergibt sich der weitere Vorteil, dass die Wartungsintervalle dieser Anlagenkomponenten verlängert werden können. Dies führt zu geringeren Betriebskosten.

Die Erfindung ist nachfolgend anhand einer Ausführungsform in der Zeichnung schematisch dargestellt und wird unter Bezugnahme auf die Zeichnung ausführlich beschrieben. Es zeigen:
- Figur 1: einen schematisch vereinfachten seitlichen Querschnitt einer erfindungsgemäßen Reinigungsvorrichtung, mit der auch das erfindungsgemäße Verfahren durchführbar ist, und
- Figur 2: einen vereinfachten Querschnitt entlang der Linie I-I von Fig. 1.

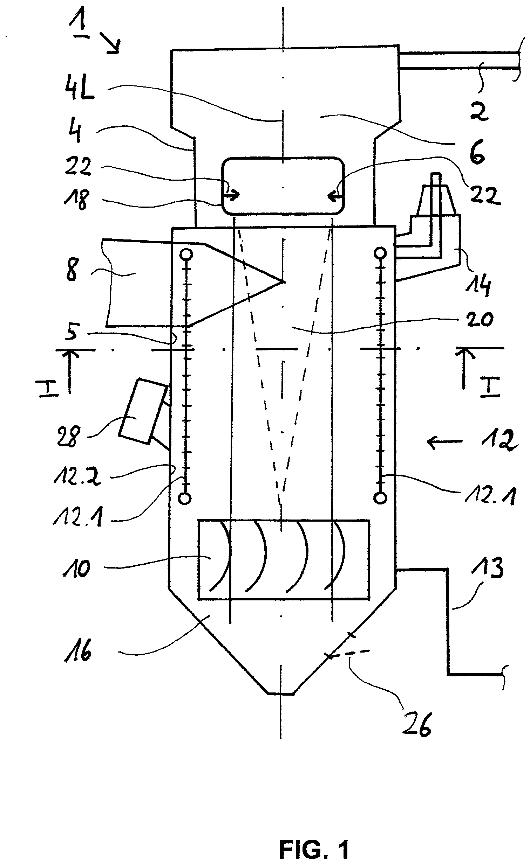

Fig. 1 zeigt eine erfindungsgemäße Reinigungsvorrichtung 1 in einer vereinfachten seitlichen Querschnittsansicht. Die Vorrichtung 1 ist über eine Verbindungsleitung 2 mit einer (nicht gezeigten) metallurgischen Anlage verbunden. Durch diese Verbindungsleitung 2 strömt heißes Rauchgas, das aschebeladen ist, in Richtung der Vorrichtung 1.

Die Vorrichtung 1 umfasst ein Gehäuse 4, wobei eine Längsachse 4L des Gehäuses 4 vertikal angeordnet ist. In einem oberen Bereich des Gehäuses 4, nämlich angrenzend an die Verbindungsleitung 2, ist eine Einlassöffnung 6 für das Rauchgas ausgebildet, durch die das Rauchgas in das Gehäuse 4 einströmen kann. In einer Seitenwandung des Gehäuses 4 ist eine Auslassöffnung 8 ausgebildet, durch die das Rauchgas aus dem Gehäuse 4 ausströmen kann.

Das Gehäuse 4 wird von dem Rauchgas entlang seiner Längsachse 4L durchströmt, nämlich zunächst vertikal von oben nach unten. In einem unteren Bereich des Gehäuses ist eine Leiteinrichtung 10 angeordnet, durch die die Strömung des Rauchgases tangential in Richtung der Innenumfangsfläche 5 des Gehäuses 4 umgelenkt bzw. ausgerichtet wird. Die Leiteinrichtung 10 ist vorzugsweise als Wirbelschaufelseparator ausgebildet und nachstehend stets als ein solcher bezeichnet, ohne darin eine Einschränkung zu sehen.

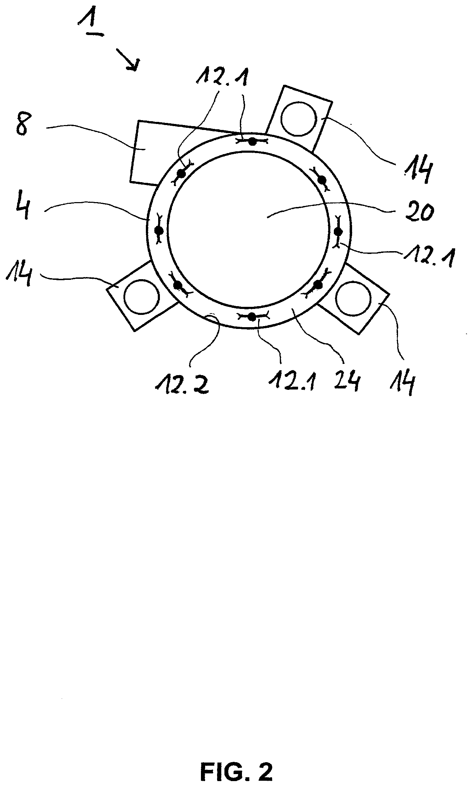

Die Vorrichtung 1 umfasst eine Einrichtung 12 zum Erzeugen eines elektrischen Felds, wobei das Rauchgas durch dieses elektrische Feld hindurchgeleitet wird. Im Einzelnen weist diese Einrichtung eine Mehrzahl von Sprühelektroden 12.1 auf, die ringförmig und in gleichem Abstand zueinander angrenzend zur Innenumfangsfläche 5 des Gehäuses 4 angeordnet sind. Die in Figur 2 gezeigte Querschnittsansicht entlang der Linie I-I von Fig. 1 verdeutlicht diese ringförmige Anordnung der Sprühelektroden 12.1. An die Sprühelektroden 12.1 wird zum Erzeugen eines elektrischen Felds eine negative Hochspannung angelegt, wobei elektrische Leitungen, die zu diesem Zweck mit den Sprühelektroden 12.1 verbunden sind, zur Vereinfachung nicht gezeigt sind.

Das Gehäuse 4 dient mit seiner Innenumfangsfläche 5 als Niederschlagselektrode 12.2, wobei das Gehäuse 4 zum Ableiten von elektrischen Ladungen durch eine geeignete Leitung 13 geerdet ist. Die Sprühelektroden 12.1 sind an mehreren Tragisolatoren 14, z.B. in Form eines ringförmigen Rahmens, befestigt und durch diese Tragisolatoren 14 elektrisch vom Gehäuse 4 getrennt. Die Tragisolatoren 14 ermöglichen die elektrische Trennung der an negative Hochspannung angeschlossenen Sprühelektroden 12.1 vom Gehäuse 4. Figur 2 verdeutlicht, dass die Tragisolatoren 14 in gleichem Abstand zueinander angeordnet sind.

Der Wirbelschaufelseparator 10 ist wie in Fig. 1 gezeigt in einem Bodenbereich 16 des Gehäuses 4 angeordnet. Hierbei erstrecken sich die Sprühelektroden 12.1 von dem Wirbelschaufelseparator 10 entlang der Innenumfangsfläche 5 des Gehäuses 4 bis in Höhe der Auslassöffnung 8.

Die Vorrichtung 1 ist als Venturi-Waschturm ausgebildet. Zu diesem Zweck ist im Bereich der Einlassöffnung 6 eine Venturikehle 18 angeordnet, die in einen Strömungskanal 20 mündet. Im Bereich der Venturikehle 20, und in Fig. 1 lediglich stark vereinfacht dargestellt, sind Einspritzdüsen 22 vorgesehen, durch die Waschflüssigkeit in die Strömung des Rauchgases eingedüst werden kann. Der Strömungskanal 20 führt von der Venturikehle 18 entlang der Längsachse 4L des Gehäuses bis zum Wirbelschaufelseparator 10.

Die Querschnittsansicht von Figur 2 verdeutlicht, dass die Mehrzahl von Sprühelektroden 12.1 in einem Ringspalt 20 angeordnet sind, der zwischen dem Strömungskanal 20 und der Innenumfangsfläche 5 des Gehäuses 4 ausgebildet ist.

Die Erfindung funktioniert nun wie folgt:
Rauchgas, das Staubpartikel enthält und zu reinigen ist, strömt über die Verbindungsleitung 2 durch die Einlassöffnung 6 in das Gehäuse 4 ein. Innerhalb des Gehäuses 4 durchströmt das Rauchgas die Venturikehle 18, wobei eine Waschflüssigkeit durch die Einspritzdüsen 22 in das Rauchgas eingedüst wird. Im Anschluss an die Venturikehle 18 strömt das Rauchgas durch den Strömungskanal 20 vertikal von oben nach unten entlang der Längsachse 4L des Gehäuses 4 in Richtung des Wirbelschaufelseparators 10, der dann die Strömung des Rauchgases tangential in Richtung der Innenumfangsfläche 5 des Gehäuses 4 umgelenkt bzw. ausrichtet.

Während das Rauchgas durch das Gehäuse 4 strömt, wird eine negative Hochspannung an die Sprühelektroden 12.1 angelegt. In Folge dessen wird zwischen den Sprühelektroden 12.1 und der Niederschlagselektrode 12.2 in Form der Innenumfangsfläche 5 ein elektrisches Feld erzeugt.

Nach Verlassen des Wirbelschaufelseparators 10 strömt das Rauchgas entlang der Innenumfangsfläche 5 des Gehäuses 4 nach oben in Richtung der Auslassöffnung 8. Hierbei werden die Sprühelektroden 12.1 von dem Rauchgas umströmt. Dies hat zur Folge, dass die Wassertropfen, in denen die Staubpartikel des Rauchgases gebunden sind, durch das elektrische Feld ionisiert werden und in Richtung der Niederschlagselektrode 12.2 in Form der Innenumfangsfläche 5 des Gehäuses 4 bewegt werden. Im Ergebnis kommt es zu einem Niederschlag der Wassertropfen an der Innenumfangsfläche 5, wobei die in den Wassertropfen gebundenen Staubpartikel sich gleichzeitig an der Innenumfangsfläche 5 ablagern. Von Vorteil hierbei ist, dass die Strömungsrichtung des Rauchgases von dem Wirbelschaufelseparator 10 zur Auslassöffnung 8 entgegen der Gravitation erfolgt. In dieser Weise wird das Rauchgas innerhalb des Gehäuses 4 effizient gereinigt, so dass das Rauchgas, wenn es durch die Auslassöffnung 8 aus dem Gehäuse 4 austritt, einen verringerten Reingasstaubgehalt und einen verminderten Wassergehalt aufweist.

Die Ausgestaltung der Innenumfangsfläche 5 des Gehäuses als Niederschlagselektrode 12.2 hat den Vorteil einer maximal nutzbare Niederschlagsfläche, weil das Rauchgas beim Strömen in Richtung der Auslassöffnung 8 tangential an der Innenumfangsfläche vorbeitritt.

Im Bodenbereich 16 des Gehäuses ist eine Entnahmeklappe 26 vorgesehen, die bei Bedarf geöffnet werden kann, um Staubpartikel in Verbindung mit dem Wasseranteil, die sich an der Innenumfangsfläche 5 abgeschieden haben, aus dem Gehäuse 4 auszutragen. Die Entnahmeklappe 26 ist in Figur 1 in ihrer geöffneten Stellung vereinfacht durch gestrichelte Linien dargestellt. Ein Öffnen der Entnahmeklappe 26 zum Austragen von abgeschiedenem Wasserschlamm kann entweder manuell oder vollautomatisch erfolgen.

In einer Seitenwand des Gehäuses ist ein Druckentlastungsventil 28 vorgesehen, das bei Überschreiten eines vorbestimmten Drucks innerhalb des Gehäuses 4 zur Umgebung hin öffnet. Hierdurch können Schädigungen der Vorrichtung 1 vermieden werden, wenn innerhalb des Gehäuses 4 ein Überdruck infolge von Verpuffungen auftreten sollte.

Die in der Zeichnung dargestellte Vorrichtung 1 basiert auf einer Kombination eines Wasserabscheidung durch Fliehkraft, mittels des Wirbelschaufelseparator 10, und eines Nasselektrofilters, indem das Rauchgas im Anschluss an den Wirbelschaufelseparator 10 durch das zwischen den Sprühelektroden 12.1 und der Niederschlagselektrode 12.2 erzeugte elektrische Feld geleitet wird.

### Bezugszeichenliste

- 1: Vorrichtung
- 2: Verbindungsleitung
- 4: Gehäuse
- 4L: Längsachse des Gehäuses
- 5: Niederschlagsfläche bzw. Innenumfangsfläche des Gehäuses
- 6: Einlassöffnung
- 8: Auslassöffnung
- 10: Leiteinrichtung bzw. Wirbelschaufelseparator
- 12: Einrichtung zum Erzeugen eines elektrischen Felds
- 12.1: Sprühelektrode
- 12.2: Niederschlagselektrode
- 14: Tragisolator
- 16: Bodenbereich des Gehäuses
- 18: Venturikehle
- 20: Strömungskanal
- 22: Einspritzdüse
- 24: Ringspalt
- 26: Entnahmeklappe
- 28: Druckentlastungsventil

## Patentansprüche

1. Reinigungsvorrichtung (1) für Rauchgas einer metallurgischen Anlage, umfassend
ein im Querschnitt kreisförmiges Gehäuse (4), das eine Innenumfangsfläche (5) sowie eine Einlassöffnung (6) und eine Auslassöffnung (8) für das Rauchgas aufweist, wobei das Gehäuse (4) mit seiner Längsachse (4L) vertikal angeordnet und als Venturi-Waschturm mit einer Venturikehle (18) und einem daran angrenzenden Strömungskanal (20) ausgebildet ist, wobei im Bereich der Venturikehle (18) zumindest eine Einspritzdüse (22) vorgesehen ist, durch die eine Waschflüssigkeit in den Strömungskanal (20) eindüsbar ist,
eine in dem Gehäuse (4) angeordnete Leiteinrichtung (10), die von dem Rauchgas anströmbar ist, wobei die Auslassöffnung (8) des Gehäuses (4) oberhalb der Leiteinrichtung (10) angeordnet ist, und
eine innerhalb des Gehäuses (4) vorgesehene Einrichtung (12) zum Erzeugen eines elektrischen Felds, wobei das Rauchgas innerhalb des Gehäuses (4) durch das elektrische Feld hindurch leitbar ist, um die in dem Rauchgas enthaltenen Staubpartikel zu ionisieren und in Richtung der Niederschlagsfläche (5) zu leiten, wobei die Einrichtung (12) zum Erzeugen eines elektrischen Felds ein Elektrodenpaar (12.1, 12.2) umfasst und eine Elektrode des Elektrodenpaars aus zumindest einer von dem Rauchgas umströmbaren Sprühelektrode (12.1) gebildet ist,
wobei die andere Elektrode (12.2) des Elektrodenpaars durch die im Querschnitt kreisförmige Innenumfangsfläche (5) des Gehäuses (4) gebildet ist und als Niederschlagsfläche (5) für die Staubpartikel dient, und
wobei die Leiteinrichtung (10) in einem Bodenbereich (16) des Gehäuses (4) angeordnet und derart ausgebildet ist, um das Rauchgas nach einem Austreten aus der Leiteinrichtung (10) innerhalb des Gehäuses (4) tangential in Richtung der im Querschnitt kreisförmigen Innenumfangsfläche (5) des Gehäuses (4) zum Abscheiden von Staubpartikeln zu leiten.

2. Reinigungsvorrichtung (1) nach Anspruch 1, **dadurch gekennzeichnet, dass** sich die Sprühelektrode (12.1) in ihrer Länge von der Leiteinrichtung (10) bis in Höhe der Auslassöffnung (8) erstreckt.

3. Reinigungsvorrichtung (1) nach Anspruch 1 oder 2, **dadurch gekennzeichnet, dass** der Strömungskanal (20) vertikal in dem Gehäuse (4) angeordnet ist und von dem Rauchgas vertikal von oben nach unten durchströmbar ist, wobei die Einlassöffnung (6) für das Rauchgas mit einem oberen Bereich des Strömungskanals verbunden ist, wobei die Leiteinrichtung (10) am unteren Ende des Strömungskanals (20) angeordnet ist.

4. Reinigungsvorrichtung (1) nach Anspruch 3, **dadurch gekennzeichnet, dass** zwischen dem Strömungskanal (20) und dem Gehäuse (4) ein Ringspalt (24) ausgebildet ist, in dem die zumindest eine Sprühelektrode (12.1) angeordnet ist, wobei der Ringspalt (24) von dem Rauchgas nach einem Austreten aus der Leiteinrichtung (10) vertikal nach oben in Richtung der Auslassöffnung (8) durchströmbar ist.

5. Reinigungsvorrichtung (1) nach einem der vorhergehenden Ansprüche, **dadurch gekennzeichnet, dass** im Bodenbereich (16) des Gehäuses (4) eine Entnahmeklappe (26) für Staubpartikel oder der gleichen vorgesehen ist.

6. Reinigungsvorrichtung (1) nach einem der vorhergehenden Ansprüche, **dadurch gekennzeichnet, dass** in der Wandung des Gehäuses (4) ein Druckentlastungsventil (28) vorgesehen ist, das bei Überschreiten eines vorbestimmten Drucks innerhalb des Gehäuses (4) zur Umgebung hin öffenbar ist.

7. Verfahren zum Reinigen von Rauchgas einer metallurgischen Anlage, bei dem das Rauchgas innerhalb eines im Querschnitt kreisförmigen Gehäuses (4) durch eine Leiteinrichtung (10) geleitet wird, wobei innerhalb des Gehäuses (4) ein elektrisches Feld erzeugt und das Rauchgas durch das elektrische Feld hindurch geleitet wird, um die in dem Rauchgas enthaltenen Staubpartikel zu ionisieren und in Richtung einer Niederschlagsfläche zu leiten, wobei das Rauchgas innerhalb des Gehäuses (4) vor dem Hindurchtreten durch das elektrische Feld durch einen Venturi-Strömungskanal (20) geleitet wird, eine Waschflüssigkeit in den Venturi-Strömungskanal (20) eingedüst wird und das Rauchgas innerhalb des Gehäuses (4) durch das elektrische Feld vertikal nach oben strömt, wobei das Rauchgas durch die Leiteinrichtung (10), die in einem Bodenbereich (16) des Gehäuses (5) angeordnet ist, tangential in Richtung einer als Niederschlagsfläche dienenden und im Querschnitt kreisförmigen Innenumfangsfläche (5) des Gehäuses (4) zum Abscheiden von Staubpartikeln geleitet wird.

## Claims

1. Cleaning device (1) for flue gas of a metallurgical plant, comprising
a housing (4) which is circular in cross section and has an inner circumferential surface (5) as well as an inlet opening (6) and an outlet opening (8) for the flue gas, wherein the housing (4) is arranged with its longitudinal axis (4L) vertical and is constructed as a Venturi washing tower with a Venturi throat (18) and a flow channel (20) adjoining thereat, wherein at least one injection nozzle (22) through which a washing liquid can be injected into the flow channel (20) is provided in the region of the Venturi throat (18),
a guide device (10) which is arranged in the housing (4) and against which the flue gas can flow, wherein the outlet opening (8) of the housing (4) is arranged above the guide device (10), and
a device (12), which is provided within the housing (4), for generating an electric field, wherein the flue gas within the housing (4) can be conducted through the electric field so as to ionise the dust particles contained in the flue gas and to conduct them in the direction of the deposition surface (5), wherein the device (12) for generating an electric field comprises an electrode pair (12.1, 12.2) and an electrode of the electrode pair is formed from at least one spray electrode (12.1) around which the flue gas can flow,
wherein
the other electrode (12.2) of the electrode pair is formed by the inner circumferential surface (5), which is circular in cross section, of the housing (4) and serves as deposition surface (5) for the dust particles and
wherein
the guide device (10) is arranged in a base region (16) of the housing (4) and constructed to conduct the flue gas, after exit from the guide device (10), within the housing (4) tangentially in the direction of the inner circumferential surface (5), which is circular in cross section, of the housing (4) for separation off of dust particles.

2. Cleaning device (1) according to claim 1, **characterised in that** the spray electrode (12.1) extends in its length from the guide device (10) to the level of the outlet opening (8).

3. Cleaning device (1) according to claim 1 or 2, **characterised in that** the flow channel (20) is arranged vertically in the housing (4) and can be flowed through by the flue gas vertically from above to below, wherein the inlet opening (6) for the flue gas is connected with an upper region of the flow3 channel, wherein the guide device (10) is arranged at the lower end of the flow channel (20).

4. Cleaning device (1) according to claim 3, **characterised in that** an annular gap (24) in which the at least one spray electrode (12.1) is arranged is formed between the flow channel (20) and the housing (4), wherein the annular gap (24) can be flowed through by the flue gas vertically upwardly in the direction of the outlet opening (8) after exiting from the guide device (10).

5. Cleaning device (1) according to any one of the preceding claims, **characterised in that** a removal flap (26) for dust particles or the like is provided in the base region (16) of the housing (4).

6. Cleaning device (1) according to any one of the preceding claims, **characterised in that** a pressure relief valve (28) openable towards the environment when a predetermined pressure within the housing (4) is exceeded is provided in the wall of the housing (4).

7. Method of cleaning flue gas of a metallurgical plant, in which the flue gas is guided within a housing (4) which is circular in cross-section, by a guide device (10), wherein an electric field is generated within the housing (4) and the flue gas is conducted through the electric field in order to ionise the dust particles contained in the flue gas and to conduct them in the direction of a deposition surface, wherein the flue gas is conducted within the housing (4) through a Venturi flow channel (20) prior to passing through the electric field, a washing liquid is injected into the Venturi flow channel (20) and the flue gas flows within the housing (4) vertically upwardly through the electric field,
wherein
the flue gas is guided by the guide device (10), which is arranged in a base region (16) of the housing (5), tangentially in the direction of an inner circumferential surface (5), which serves as deposition surface and is circular in cross-section, of the housing (4) for separation off of dust particles.

## Revendications

1. Dispositif d'épuration (1) destiné à des gaz de fumée d'une installation métallurgique, comprenant :
un logement (4) de section circulaire, qui présente une surface périphérique interne (5) ainsi qu'une ouverture d'entrée (6) et une ouverture de sortie (8) pour les gaz de fumée ; dans lequel le logement (4) est disposé en position verticale avec son axe longitudinal (4L) et est réalisé sous la forme d'une tour de lavage de type Venturi comprenant un col du Venturi (18) et un canal d'écoulement (20) en position adjacente à ce dernier; dans lequel on prévoit, dans la zone du col du Venturi (18) au moins une buse d'injection (22) à travers laquelle on peut injecter un liquide de lavage dans le canal d'écoulement (20) ;
un mécanisme de guidage (10) disposé dans le logement (4) à travers lequel peuvent s'écouler les gaz de fumée ; dans lequel l'ouverture de sortie (8) du logement (4) est disposée au-dessus du mécanisme de guidage (10) ; et
un mécanisme (12) que l'on prévoit à l'intérieur du logement (4) pour la génération d'un champ électrique ; dans lequel les gaz de fumée peuvent être guidés à l'intérieur du logement (4) à travers le champ électrique dans le but d'ioniser les particules de poussière que contiennent les gaz de fumée et de guider ces dernières en direction de la surface de précipitation (5) ; dans lequel le mécanisme (12) destiné à générer un champ électrique comprend une paire d'électrodes (12.1, 12.2) et une électrode de la paire d'électrodes est réalisée à partir d'au moins une électrode de pulvérisation (12.1) qui peut être baignée par les gaz de fumée ;
dans lequel l'autre électrode (12.2) de la paire d'électrodes est réalisée par l'intermédiaire de la surface périphérique interne (5) de section circulaire du logement (4) et fait office de surface de précipitation (5) pour les particules de poussière ; et
dans lequel le mécanisme de guidage (10) est disposé dans une zone de base (16) du logement (4) et est réalisé de manière à guider les gaz de fumée en direction d'une sortie hors du mécanisme de guidage (10) à l'intérieur du logement (4) en position tangentielle dans la direction de la surface périphérique interne (5) de section circulaire du logement (4) dans le but de séparer les particules de poussière.

2. Dispositif d'épuration (1) selon la revendication 1, **caractérisé en ce que** l'électrode de pulvérisation (12.1) s'étend sur sa longueur depuis le mécanisme de guidage (10) jusqu'à la hauteur de l'ouverture de sortie (8).

3. Dispositif d'épuration (1) selon la revendication 1 ou 2, **caractérisé en ce que** le canal d'écoulement (20) est disposé en position verticale dans le logement (4) et peut être traversé de haut en bas en direction verticale par les gaz de fumée ; dans lequel l'ouverture d'entrée (6) pour les gaz de fumée est reliée à une zone supérieure du canal d'écoulement ; dans lequel le mécanisme de guidage (10) est disposé à l'extrémité inférieure du canal d'écoulement (20).

4. Dispositif d'épuration (1) selon la revendication 3, **caractérisé en ce que** l'on réalise, entre le canal d'écoulement (20) et le logement (4), une fente de forme annulaire (24) dans laquelle est disposée ladite au moins une électrode pulvérisation (12.1) ; dans lequel la fente de forme annulaire (24) peut être traversée par les gaz de fumée après une sortie hors du mécanisme de guidage (10) en position verticale vers le haut dans la direction de l'ouverture de sortie (8).

5. Dispositif d'épuration (1) selon l'une quelconque des revendications précédentes, **caractérisé en ce que** l'on prévoit dans la zone de base (16) du logement (4) un clapet de prélèvement (26) pour les particules de poussière ou analogues.

6. Dispositif d'épuration (1) selon l'une quelconque des revendications précédentes, **caractérisé en ce que** l'on prévoit, dans la paroi du logement (4), une soupape de décharge de pression (28) qui peut être ouverte en direction de l'environnement lors d'un dépassement vers le haut d'une pression prédéfinie régnant à l'intérieur du logement (4).

7. Procédé pour l'épuration de gaz de fumée d'une installation métallurgique ; dans lequel on guide les gaz de fumée à l'intérieur d'un logement (4) de section circulaire à travers un mécanisme de guidage (10) ; dans lequel on génère un champ électrique à l'intérieur du logement (4) et on guide les gaz de fumée à travers le champ électrique dans le but d'ioniser les particules de poussière que contiennent les gaz de fumée et de les guider en direction d'une surface de précipitation ; dans lequel on guide les gaz de fumée à l'intérieur du logement (4) avant leur pénétration à travers le champ électrique à travers un canal d'écoulement de type Venturi (20), on introduit par pulvérisation un liquide de lavage dans le canal d'écoulement de type Venturi (20) et les gaz de fumée s'écoulent vers le haut en position verticale à l'intérieur du logement (4) en passant à travers le champ électrique,
dans lequel les gaz de fumée sont guidés à travers le mécanisme de guidage (10), qui est disposé dans une zone de base (16) du logement (4), en position tangentielle dans la direction d'une surface périphérique interne (5) de section circulaire du logement (4) faisant office de surface de précipitation dans le but de séparer les particules de poussière.
